Europäisches Patentamt

European Patent Office

Office européen des brevets

(19)

(11) Veröffentlichungsnummer: **0 240 760**
**A2**

(12) **EUROPÄISCHE PATENTANMELDUNG**

(21) Anmeldenummer: 87103478.1

(51) Int. Cl.⁴: **C08H 5/02** , C07G 1/00 ,
D21C 11/00

(22) Anmeldetag: 11.03.87

(30) Priorität: 08.04.86 DE 3611676

(43) Veröffentlichungstag der Anmeldung:
14.10.87 Patentblatt 87/42

(84) Benannte Vertragsstaaten:
AT BE CH FR LI LU NL SE

(71) Anmelder: G.A. Pfleiderer GmbH & Co KG

D-8430 Neumarkt(DE)

(72) Erfinder: Hüttermann, Aloys, Prof. Dr.
Forstbotanisches
Institut der Universität Göttingen
Büsgenweg 2 D-3400 Göttingen-Weende(DE)
Erfinder: Milstein, Oleg, Dr. Forstbotanisches
Institut
der Universität Göttingen Büsgenweg 2
D-3400 Göttingen-Weende(DE)
Erfinder: Haars, Annegret, Dr.
Forstbotanisches Institut
der Universität Göttingen Büsgenweg 2
D-3400 Göttingen-Weende(DE)
Erfinder: Wehr, Konrad Forstbotanisches
Institut der
Universität Göttingen Büsgenweg 2
D-3400 Göttingen-Weende(DE)
Erfinder: Lovas, Gabor Forstbotanisches
Institut der
Universität Göttingen Büsgenweg 2
D-3400 Göttingen-Weende(DE)

(74) Vertreter: Czowalla, Ernst
Patentanwälte E. Czowalla P. Matschkur
Dr.-Kurt-Schumacher-Strasse 23 Postfach
9109
D-8500 Nürnberg 11(DE)

(54) Verfahren und Vorrichtung zum Ausfällen von negativ geladenen Lignin-Derivaten.

(57) Die Erfindung bezieht sich auf ein Verfahren zum Ausfällen von negativ geladenen Lignin-Derivaten, wie Ligninsulfonsäure und Chlorligninen aus Sulfitablaugen mittels nicht im Überschuß zugesetzten Polyiminen, wobei der pH-Wert und die Temperatur annähernd konstant gehalten werden und die Fällungsrate anhand der UV-Absorption des Überstandes des Niederschlags ermittelt wird, wobei die Einstellung des pH-Wertes und der Zusatz an Fällungsmittel durch einen Prozeßrechner gesteuert und die UV-Absorption in einem mit dem Fällungsreaktor verbundenen Nebenkreislauf nach Abtrennung des Niederschlages gemessen und der ermittelte Meßwert in den Rechner eingegeben wird.

Weiterhin bezieht sich die Erfindung auf eine Vorrichtung zur Durchführung des Verfahrens, wobei der Reaktor mit einem pH-Meter und mit einem Nebenkreislauf verbunden ist, der in Strömungsrichtung hintereinander eine Vorrichtung (Zentrifuge) zum Trennen des Niederschlags von dem zu messenden Überstand und einen UV-Absorptionsmesser aufweist und wobei beide Meßgeräte mit einem Rechner gekoppelt sind, der seinerseits mit Ansperrorganen für die pH-Reagenzien und das Fällungsmittel sowie in der Verbindungsleitung zwischen dem Reaktor und einem Absetzgefäß gekoppelt ist.

FIG. 1

## Verfahren und Vorrichtung zum Ausfällen von negativ geladenen Lignin-Derivaten

Die Erfindung richtet sich auf ein Verfahren zum Ausfällen von negativ geladenen Lignin-Derivaten, wie Ligninsulfonsäure und Chlorligninen aus Sulfitablaugen mittels nicht im Überschuß zugesetzten Polyiminen, wobei der pH-Wert und die Temperatur annähernd konstant gehalten werden und die Fällungsrate anhand der UV-Absorption des Überstandes des Niederschlags ermittelt wird.

Die Zellstoffindustrie schließt in großem Umfang die Holzrohstoffe nach dem Sulfitverfahren auf. Hierbei entstehen Abwässer in Form der sogenannten Sulfitablauge und, aus der Bleicherei, chlorligninhaltige Bleichereiabwässer. Beide Lignin-Derivate liegen als Makromoleküle vor und weisen eine ähnliche chemische Struktur auf. Die Bleichereiabwässer gelangen noch heute zum großen Teil ungeklärt in den Vorfluter, und sie stellen infolgedessen eine erhebliche Umweltbelastung dar. Die zwischenzeitlich außerordentlich verschärften Vorschriften zwingen die Zellstoffindustrie zunehmend zu einer möglichst sauberen Lösung dieses Emmissionsproblems. Der größte Teile der Sulfitablauge wird gegenwärtig noch verbrannt, was ebenfalls weder unproblematisch ist, noch eine vorteilhafte Energiebilanz aufweist. Die Abgänge der Bleicherei hingegen können vornehmlich aus Korrosionsgründen nicht eingedampft und verbrannt werden. Die organischen Chlorverbindungen wiedersetzen sich infolge ihrer hohen Toxizität auch weitgehend einem biologischen Abbau. Der Wirkungsgrad solcher Verfahren ist außerordentlich gering. Nach gegenwärtiger Auffassung läßt sich eine befriedigende Lösung nur durch kombinierte chemische, physikalische und biologische Behandlung erzielen.

Die Gewinnung von Ligninsulfonaten aus Sulfitablauge über einen Fällungskomplex durch Zugabe von Polykationen beschreibt die DE-PS 30 38 241. Das dort offenbarte Verfahren führt zu einem hochkonzentrierten Produkt und zeichnet sich durch die Wiederverwendbarkeit des Fällungsmittels Polyimin aus. In Z.Wasser-Abwasser-Forschung, 19,33 bis 37 (1986) wird über das Ausfällen von Chlorlignin aus Zellstoffabwasser durch Polyimin referiert. Hiernach bildet sich bei der Zugabe von Polyäthylenimin ein wasserunlöslicher Symplex. Nach den bei diesen Verfahren gewonnenen Erkenntnissen führt die Zugabe des Fällungsmittels im Überschuß zur teilweisen Wieder-Auflösung dieses Symplex. Andererseits ist es dann auch im Überstand vorhanden, und stört dann die weiteren biologischen Reinigungsstufen. Schließlich verteuert diese Erscheinung das Verfahren. Es wird deshalb eine Verfahrensweise angestrebt, die den Zusatz des Fällungsmittels im Überschuß zuverlässig vermeidet. Es kommt hinzu, daß der Symplex selbst nach Zugabe des Fällungsmittels nicht sofort in gut fällbarer und auch abtrennbarer Form vorliegt, ein Umstand, der das Verfahren erheblich kompliziert. Infolgedessen sind in der Praxis durchgeführte Versuche mit der Polyiminfällung von Bleichereiabwässern gescheitert. Es besteht deshalb ein ausgesprochenes Bedürfnis nach einer wirtschaftlich arbeitenden Methode zum Ausfällen von Lignin-Derivaten, wie Ligninsulfonsäure und Chlorligninen aus Abwässern der Zellstoffindustrie, welches vor allem den entscheidenden Gesichtspunkten der Verminderung der Umweltbelastung Rechnung trägt.

Diese Aufgabe löst die Erfindung bei einem Verfahren unter den eingangs genannten Vorgaben in der Weise, daß die Einstellung des pH-Wertes und der Zusatz an Fällungsmittel durch einen Prozeßrechner gesteuert und die UV-Absorption in einem mit dem Fällungsreaktor verbundenen Nebenkreislauf nach Abtrennung des Niederschlags gemessen und der ermittelte Meßwert in den Rechner eingegeben wird. Der Gedanke eines rechnergesteuerten Verfahrensablaufs kommt bei einem solchen wegen des Überschußproblems beim Fällungsmittel hochsensiblen Verfahren besonders vorteilhaft zur Anwendung. Auf diese Weise wird eine optimale Regelung des Zusatzes an Fällungsmittel ermöglicht. Die Absorptionsmessung geht von einem Absorptionsmaximum der Lignin-Derivate bei 280 nm aus. Mit steigender Fällungsrate sinkt somit die UV-Absorption des Überstandes. Gehen diese Meßwerte in einen Rechner ein, läßt sich das Verfahren in einwandfreier und optimaler Weise steuern.

Es liegt im Rahmen der Erfindung, auch den Zufluß der Ablauge in den Fällungsreaktor und den Ablauf aus diesem nach erfolgter Ausfällung in ein Absetzgefäß durch den Rechner zu steuern.

Zwar setzt unmittelbar mit beginnendem Zusatz des Fällungsmittels zu der Ablauge die Sedimentbildung ein, doch hat die praktische Befassung mit dem Verfahren gezeigt, daß dann der Symplex noch nicht sofort in gut fällbarer Form vorliegt. Der Fällungsvorgang erfordert vielmehr eine gewisse "Reifezeit", in welcher sich die positiv und negativ geladenen Makromoleküle aneinander-lagern und damit den Niederschlag bilden. Von besonderer Bedeutung ist der Gedanke, die Ablauge mit dem Fällungsmittel eine kurze Zeitdauer von ca. 15 Minuten in dem Reaktor zu belassen, für die anschließende Messung des Absorptionsgrades. Erst dann, wenn der Symplex in gut fällbarer Form vorliegt, läßt sich der Erfolg des Verfahrens quantitativ zutreffend bestimmen.

Die Erfindung befaßt sich darüber hinaus mit einer Vorrichtung zur Durchführung des beanspruchten Verfahrens, wobei wenigstens ein Reaktor Verwendung findet. Dieser Reaktor ist erfindungsgemäß mit einem pH-Meter und mit einem Nebenkreislauf verbunden, der in Strömungsrichtung hintereinander eine Vorrichtung zum Trennen des Sediments von dem zu messenden Überstand und einen UV-Absorptionsmesser aufweist, wobei beide Meßgeräte mit einem Rechner gekoppelt sind, der seinerseits mit Absperrorganen in den Zuführleitungen für die pH-Reagenzien und das Fällungsmittel sowie in der Verbindungsleitung mit dem Reaktor und einem Absetzgefäß gekoppelt ist. Bei dieser Vorrichtung gehen die Meßwerte von pH-Messer und Absorptionsmesser als Signale in den Prozeßrechner ein und werden dort beispielsweise mit vorprogrammierten Erfahrungswerten verglichen. Den Ausgang des Rechners bilden dann Impulse zur Beeinflußung von Absperrorganen, wie Ventilen, Pumpen od.dgl. in den verschiedenen Zuleitungen. In dem Nebenkreislauf wird die aus dem Reaktor entnommene Probe von dem Sediment befreit und der verbleibende Überstand der Messung zugeführt.

Als besonders vorteilhaft hat es sich erwiesen, zwei Reaktoren hintereinander anzuordnen, von denen einer der pH-Wert und Temperatureinstellung und der andere der Fällungsreaktion dient. Beide hintereinandergeschalteten Reaktoren arbeiten im Takt miteinander.

Schließlich liegt es im Rahmen der Erfindung, in dem Nebenkreislauf eine Zentrifuge, gegebenenfalls eine Durchlaufzentrifuge, zum Abtrennen des Niederschlags vorzusehen.

Weitere Merkmale, Einzelheiten und Vorteile der Erfindung ergeben sich aus der folgenden Beschreibung sowie der Zeichnung. Hierbei zeigen:

Fig. 1 eine bevorzugte Ausführungsform in Gestalt eines Fluß-und Regelschemas und

Fig. 2 ein Diagramm über das Ergebnis der UV-Absorption im Verhältnis zu dem zugesetzten Fällungsmittel.

Das zu behandelnde Abwasser wird durch die Zuleitung 1 in einen Reaktor 2 eingeführt, der mit einem Rührwerk 3 versehen ist. Der Reaktor 2 ist mit einer Heizeinrichtung 4 versehen, die unter Zuhilfenahme eines Thermostaten 5 den Reaktorinhalt auf einen gewünschten Wert einstellt und konstant erhält. In den Reaktor münden die Zuleitungen 6 und 7, von denen die erstere mit einem Vorratsgefäß 8 für eine Säure, die letztere mit einem Vorratsgefäß 9 für eine Lauge verbunden ist. Beide Leitungen 6 und 7 sind mit je einem Ventil 10 versehen. Selbstverständlich können an deren Stelle, gegebenenfalls auch zusätzlich, entsprechende Fördereinrichtungen, wie Pumpen od.dgl. vorgesehen sein. Weiter ist der Reaktor 2 über die Sondenleitung 11 mit einem pH-Meter 12 verbunden, der die entsprechenden Werte der im Reaktor 2 befindlichen Flüssigkeit ermittelt.

Der Bodenauslauf des Reaktors 2 ist über eine mit einem Absperrventil 13 versehene Leitung 14 mit einem weiteren Reaktor 15 verbunden, der seinerseits wieder ein Rührwerk 16 enthält. In diesen Reaktor 15 mündet eine mit dem Behälter 17 verbundene und mit einem Absperrventil 18 versehene Leitung 19. Dieser Vorratsbehälter 17 dient zur Aufnahme eines Fällungsmittels. Von der Abflußleitung 20 des Reaktors 15 zweigt ein Nebenkreislauf 21 ab, in dem in Strömungrichtung hintereinander eine Zentrifuge 22 und ein Photometer 23 zur Ermittlung der UV-Absorption angeordnet ist. Mit der Leitung 24 mündet dieser Nebenkreislauf 21 wieder in den Reaktor 15 ein.

Die Abflußleitung 20 ist mit einem Absperrventil 26 versehen, und sie mündet in einen Absetzbehälter 27, in welchem sich das Sediment am Boden absetzt, von wo es durch die Öffnung 28 entnommen wird, während der Überstand dekantiert und durch die Leitung 29 entnommen wird.

Das pH-Meter 12 und das Photometer 23 sind über Leitungen 30 mit einem Prozeßrechner 31 gekoppelt, der die ermittelten Meßwerte registriert und gegebenenfalls mit vorprogrammierten Vergleichswerten vergleicht. Die Ausgänge 32 dieses Rechners 31 sind mit den Absperrventilen 10, 13, 18, 26 verbunden und dienen der Übermittlung entsprechender Regelimpulse.

Das Verfahren läuft etwa wie folgt ab:

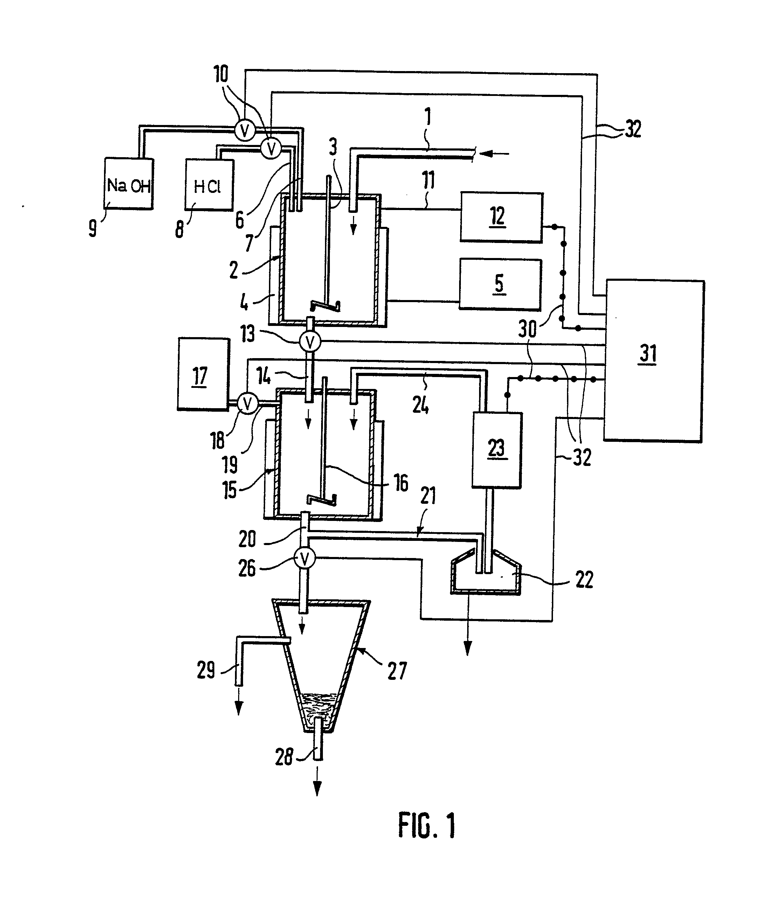

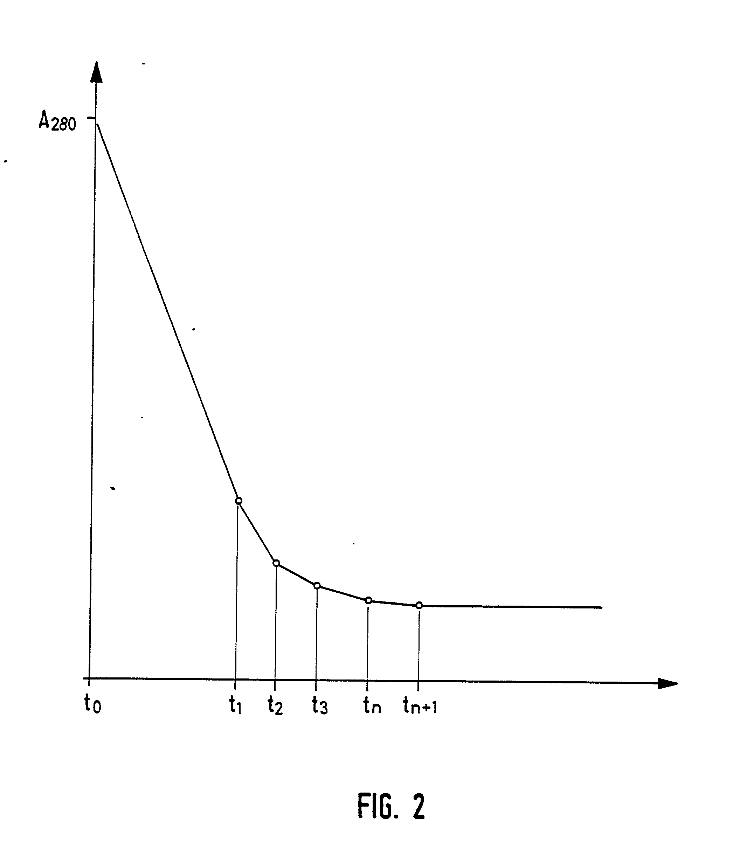

Die Ablauge wird durch die Leitung 1 in den Reaktor 2 eingeführt und dort unter ständigem Rühren auf die gewünschte Verfahrenstemperatur erwärmt. Zugleich mißt das pH-Meter 12 den pH-Wert des Reaktorinhalts und gibt diesen Wert in den Rechner 31 ein. Dieser vergleicht den Ist-Wert mit dem vorgegebenen Soll-Wert und gibt bei vorhandener Differenz einen entsprechenden Impuls an eines der Ventile 10, bei deren Öffnen eine aus entsprechenden Erfahrungswerten zuvor errechnete und vorprogrammierte Menge an Säure oder Lauge aus den Vorratsbehältern 8 oder 9 entnommen und in den Reaktor 2 eingeführt wird. Dieser Vorgang wiederholt sich mit im allgemeinen jeweils geringer werdender zuzusetzender Menge solange, bis Ist-Wert und Soll-Wert des pH-Wertes übereinstimmen. Dieser Zustand löst im Rechner 31 ein weiteres Signal an das Ventil 13 aus, welches öffnet und den Inhalt aus dem Reaktor 2 in den nachfolgenden Reaktor 15 strömen läßt. Auch hier wird der Reaktorinhalt durch ein Rührwerk 16 ständig in Bewegung gehalten. Da der Nebenkreislauf 21 mit dem Inneren des Reaktors 15 in Verbindung steht, gelangt die Flüssigkeit direkt oder, wie in Figur 1 dargestellt über die Zentrifuge 22, in das Photometer 23, welches die optische Dichte der Flüssigkeit bei 280 nm ermittelt. Dieser Meßwert At o wird im Rechner 31 eingegeben und dort mit einem vorgegebenen und vorprogrammierten Erfahrungswert verglichen. Dies löst ein Signal an das Ventil 18 aus, welches öffnet und das Fällungsmittel aus dem Vorratsbehälter 17 in den Reaktor 15 einströmen läßt. Es werden zunächst etwa 80 % der vorberechneten erforderlichen Menge an Fällungsmittel zugesetzt. Nach einer Verweilzeit von etwa 10 Minuten nach Beendigung des Zusatzes an Fällungsmittel wird die Durchlaufzentrifuge 22 in Betrieb gesetzt, welche das in der Flüssigkeit enthaltene ausgeflockte Sediment abtrennt und den Überstand, gegenenfalls über eine nicht im einzelnen dargestellte Pumpe, dem Photometer 23 zuführt, dessen optische Dichte durch die UV-Absorption gemessen wird. Dieser Meßwert At 1 geht in den Rechner 31 ein und veranlaßt dort ein weiteres Signal an das Ventil 18 in der Zuleitung 19 für das Fällungsmittel, von dem nun allerdings eine wesentlich geringere Menge zugesetzt wird. Ermittelt daraufhin das Photometer 23 einen neuen stabilisierten Meßwert der UV-Absorption in dem ihm zugeführten Überstand, wird dieser Meßwert At 2 mit dem vorhergehenden Wert At 1 verglichen. Ergibt sich eine Differenz in der Weise, daß At 2 < At 1, gilt dies als Anzeige für eine weiter ablaufende Fällungsreaktion. Daraufhin veranlaßt der Rechner 31 eine erneute Zugabe einer wiederum etwas geringeren Menge des Fällungsmittels aus dem Vorratsbehälter 17 in den Reaktor 15. Dieser Vorgang wiederholt sich solange, bis At n = At n - 1 ist. Daraus folgt, daß die maximale Fällungsrate erreicht ist, die wiederum dem minimalen Verbrauch an Fällungsmittel entspricht. Dieser Vorgang ist in Figur 2 graphisch dargestellt.

Im folgenden wird die Erfindung anhand eines Beispiels erläutert, welches sich auf ein Bleichereiabwasser der Stufen C und E eines inländischen Zellstoffherstellers bezieht (C = Chlorierungsstufe, E = Extraktionsstufe). Das Abwasser hatte die folgenden ökologisch bedeutsamen Parameter:

CSB mg/l    2560
A 230 (pH 5,3)    19
A 280 (pH 5,3)    14
A 464 = Färbung    0,79
AOX (Gehalt an chlororganischen Verbindüngen) mg/l  57
pH    7,2

Zehn Liter dieses Abwassers wurden dem Reaktor 2 zugegeben und dort unter Rühren bei 100 UpM innerhalb von etwa 15 Minuten auf die gewünschte Temperatur von 50°C gebracht. Der pH-Wert dieser Lösung wurde mit dem oben beschriebenen Meß-und Regelsystem auf einen Wert von pH = 5,2 eingestellt, wobei 15 ml einer 1 n Schwefelsäure benötigt wurden. Nach Erreichen des eingestellten Soll-Wertes wurde die Lösung in den Reaktor 15 überführt und dort wieder mit 100 UpM gerührt, während der vorherige Reaktorbehälter 2 erneut mit Abwasser gefüllt und dieses für die Weiterbehandlung vorbereitet wurde. Die optische Dichte wurde zunächst gemessen (A 280), indem in dem Nebenkreislauf 21 die Lösung mit einer Durchlaufgeschwindigkeit von ca. 100 ml/min. durch das Photometer 23 gepumpt wurde (Zeitverbrauch ca. 3 Minuten). Dann wurde die vorberechnete Menge an Fällungsmittel zugeben, nämlich 16 ml 10 % (w/w) Polyäthylenimin-Lösung. Es wurde 10 Minuten gerührt und dann wiederum im Nebenkreislauf 21 bei eingeschalteter Zentrifuge 22 die optische Dichte im Photometer 23 erneut gemessen. Das Totvolumen im Nebenkreislauf 21 betrug mit eingeschalteter Zentrifuge insgesamt 400 ml. Nach Erreichen eines konstanten Meßwerts der UV-Absorption wurden zwei ml Polyäthylenimin zugegeben und erneut gemessen. Dieser Vorgang wiederholte sich solange, bis ein konstanter Wert der optischen Dichte erreicht wurde.

Reaktionsablauf:

| Zeit | Opt. Dichte A 280 | Chemikalienverbrauch Zugabe beim Zeittakt | insges. |
|------|------|------|------|
| t 0 | 14 | -- | |
| t 1 | 7,6 | 16 ml | 16 ml |
| t 2 | 6,8 | 2 ml | 18 ml |
| t 3 | 6,4 | 1 ml | 19 ml |
| t 4 | 6,2 | 0,5 ml | 19,5 ml |
| t 5 | 6,0 | 0,5 ml | 20,0 ml |
| t 6 | 6,0 | 0,5 ml | 20,5 ml |

Der gesamte Fällungsvorgang benötigte 22 Minuten. Danach wurde der Inhalt des Reaktors 15 in ein Absetzgefäß 27 in Form eines Imhoffgefäßes umgepumpt. Nach weiteren 15 Minuten hatte sich ein leicht filtrierbares Sediment gebildet. Der Filterkuchen hatte nach Filtration einen Wassergehalt von 75 - 80 % und konnte entsorgt werden. Das Filtrat bzw. der Überstand der Fällung hatte die folgenden Werte:

| | | |
|------|------|------|
| CSB | 1306 | 51 % des ursprünglichen Gehalts |
| A 230 | 5,1 | 27 % |
| A 280 | 6,0 | 43 % |
| A 464 | 0,11 | 15 % |
| AOX | 15,6 | 27 % |
| pH | 5,7 | |

## Ansprüche

1. Verfahren zum Ausfällen von negativ geladenen Lignin-Derivaten, wie Ligninsulfonsäure und Chlorligninen aus Sulfitablaugen mittels nicht im Überschuß zugesetzten Polyiminen, wobei der pH-Wert und die Temperatur annähernd konstant gehalten werden und die Fällungsrate anhand der UV-Absorption des Überstandes des Niederschlags ermittelt wird, dadurch gekennzeichnet, daß die Einstellung des pH-Wertes und der Zusatz an Fällungsmittel durch einen Prozeßrechner (31) gesteuert und die UV-Absorption in einem mit dem Fällungsreaktor (15) verbundenen Nebenkreislauf (21) nach Abtrennung des Niederschlages gemessen und der ermittelte Meßwert in den Rechner (31) eingegeben wird.

2. Verfahren nach Anspruch 1, dadurch gekennzeichnet, daß auch der Zufluß der Ablauge in den Fällungsreaktor (15) und der Ablauf aus diesem nach erfolgter Ausfällung in ein Absetzgefäß (27) durch den Rechner (31) gesteuert wird.

3. Verfahren nach Anspruch 1 oder 2, dadurch gekennzeichnet, daß die Reaktionslösung mit dem Fällungsmittel eine kurze Zeitdauer von ca. 15 Minuten in dem Reaktor (15) belassen wird.

4. Vorrichtung zur Durchführung des Verfahrens nach wenigstens einem der Ansprüche 1 bis 3 mit wenigstens einem Reaktor, dadurch gekennzeichnet, daß der Reaktor (15) mit einem pH-Meter (23) und mit einem Nebenkreislauf (21) verbunden ist, der in Strömungsrichtung hintereinander eine Vorrichtung (Zentrifuge 22) zum Trennen des Niederschlags von dem zu messenden Überstand und einen UV-Absorptionsmesser (23) aufweist und daß beide Meßgeräte mit einem Rechner (31) gekoppelt sind, der seinerseits mit Absperrorganen (10, 18, 26) für die pH-Reagenzien und das Fällungsmittel sowie in der Verbindungsleitung (26) zwischen dem Reaktor (15) und einem Absetzgefäß (27) gekoppelt ist.

6

5. Vorrichtung nach Anspruch 4, <u>dadurch gekennzeichnet,</u> daß zwei Reaktoren (2, 15) hintereinander angeordnet sind, von denen einer (2) der pH-Wert-und Temperatur-Einstellung und der andere (15) der Fällungsreaktion dient.

FIG. 1

FIG. 2